# EUROPEAN PATENT SPECIFICATION

(11) **EP 2 636 872 B1**
(45) Date of publication and mention of the grant of the patent: **01.05.2019**
(21) Application number: 13157705.8
(22) Date of filing: 04.03.2013
(51) Int. Cl.: F02C 7/32

(54) **Turbomachine drive arrangement**
Antriebsanordnung einer Turbomaschine
Dispositif d'entraînement d'une turbomachine

(30) Priority: 05.03.2012 US 201213411920
(43) Date of publication of application: 11.09.2013
(73) Proprietor: Hamilton Sundstrand Corporation, Windsor Locks, CT 06096-1010 (US)
(72) Inventor: Brust, Eric A., Machesney Park, IL Illinois 61115 (US); Lemmers, JR., Glenn C., Loves Park, IL Illinois 61111 (US)
(74) Representative: Dehns

(56) References cited:
- US-A- 4 315 442
- US-A- 4 922 119
- US-A- 4 960 085
- US-A1- 2008 098 732
- US-A1- 2011 225 978

## Description

### BACKGROUND

This disclosure relates generally to a drive arrangement for a turbomachine. More particularly, this disclosure relates to an arrangement that drives the turbomachine during a first mode of operation and generates electric power using the turbomachine in a second mode of operation.

Turbomachines, such as gas turbine engines are known. A typical turbomachine includes multiple sections, such as a fan section, a compression section, a combustor section, and a turbine section. Many turbomachines, particularly gas turbine engines, have large rotors in the compression section that must be accelerated to high rotational speeds until the rotor is rotating fast enough to sustain operation of the turbomachine. Typically, a motor separate from the turbomachine drives an input shaft that is used to accelerate the rotors.

Many turbomachines use generators to produce electric power for various components, such as components on an aircraft. Some turbomachines use generators separate from the motor that drives the rotors. Integrated drive generators (IDGs) are an example of this type of generator, which can produce constant frequency electric power. As can be appreciated, the generator separate from the motor undesirably adds weight and complexity to the turbomachine.

Other turbomachines use the motors as generators after the turbomachine is self-sustaining. The turbomachine drives these generators. A variable frequency starter generator (VFSG) is an example of this type of generator. VFSGs generate electric output power with a frequency that is proportional to the turbomachine speed. Electrical usage equipment must then be capable of operating under this variable frequency input, which generally increases their weight, envelope, power losses, and cost. Some arrangements of this type include complicated shafting, gearing, clutching, or valving to enable both start and generate modes of operation.

US 4 315 442 discloses a hydraulic control system including a first and second hydraulic unit and a valve to control flow between the first and second units.

US 4 922 119 discloses a starting system for an aircraft propulsion engine where first and second hydraulic units are used to maintain a constant speed drive transmission.

US 4 960 085 discloses a pneumatic and electro-pneumatic pre-engage engine starter.

US 2008/0098732 discloses a hydraulic differential for an integrated drive generator.

### SUMMARY

The invention relates to a hydraulic log according to claim 1 and to a method of driving components within a turbomachine according to claim 10. The disclosure relates to a hydraulic log, comprising: a valve that controls a flow of fluid within the hydraulic log to provide a rotational output from the hydraulic log that is different than a rotational input to the hydraulic log; and wherein the valve controls flow of fluid from a higher pressure area of the hydraulic log to a lower pressure area of the hydraulic log; a first plurality of pistons each having a stroke that is adjusted with a first wobbler plate to provide a rotational output from the hydraulic log that is different than a rotational input to the hydraulic log; a second plurality of pistons, wherein a stroke of the second plurality of pistons is configured to be adjusted with a second wobbler plate to provide a rotational output from the hydraulic log that is different than a rotational input to the hydraulic log; and a port plate which separates the hydraulic log into a first portion including the first wobbler plate and a second portion including the second wobbler plate, the port plate having a first opening to permit flow from the first portion to the second portion and a second opening to permit flow from the second portion to the first portion; and wherein the first opening is in the higher pressure area of the hydraulic log and the second opening is in the lower pressure area of the hydraulic log.

An example method of driving components within a turbomachine includes: providing a first rotational input to a hydraulic log using a motor-generator when the motor-generator is in a motor mode of operation; and using a valve that controls flow within the hydraulic log to adjust the first rotational input to a second rotational input that drives a compressor rotor; wherein the hydraulic log comprises: a first wobbler plate to adjust a stroke of a first plurality of pistons; a second wobbler plate to adjust a stroke of a second plurality of pistons; and a port plate which separates the hydraulic log into a first portion including the first wobbler plate and a second portion including the second wobbler plate, the port plate having a first opening in a higher pressure area of the hydraulic log, and a second opening in a lower pressure area of the hydraulic log, the method further comprising: moving flow through the first opening from the first portion to the second portion; moving flow through the second opening from the second portion to the first portion; and controlling flow of fluid from the higher pressure area of the hydraulic log to the lower pressure area of the hydraulic log using the valve.

These and other features of the disclosed examples can be best understood from the following specification and drawings, the following of which is a brief description:

### BRIEF DESCRIPTION OF THE DRAWINGS

Figure 1 shows a section view of an example gas turbine engine.
Figure 2 shows an example rotor assembly of the Figure 1 engine.
Figure 3 shows a highly schematic view of an arrangement for driving the Figure 1 engine.
Figure 4 shows a more detailed view of the Figure 3 arrangement.
Figure 5 shows a close-up schematic view of a wobbler plate within the Figure 4 hydraulic log.
Figure 6 shows a perspective view of an example port plate within the hydraulic log of the Figure 3 arrangement.
Figure 7 shows a highly schematic view of the hydraulic log within the Figure 3 arrangement.
Figure 8 shows a highly schematic view of another arrangement for driving the Figure 1 engine.
Figure 9 shows a highly schematic view of a hydraulic log within the Figure 8 arrangement.
Figure 10 shows an example valve assembly for use within the Figure 8 arrangement.
Figure 11 shows another example valve assembly for use within the Figure 8 arrangement.

### DETAILED DESCRIPTION

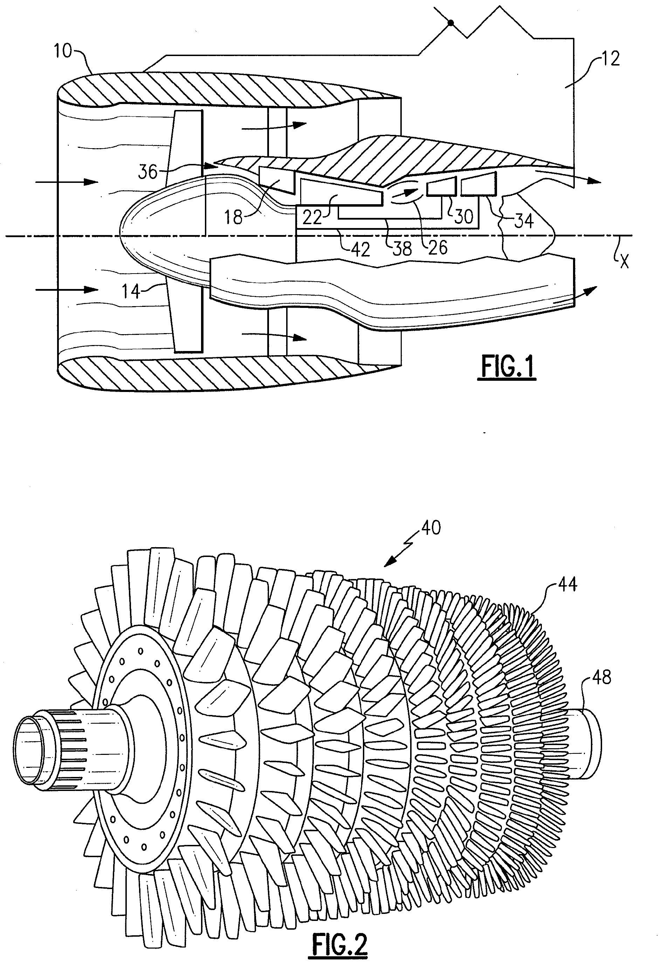

Referring to Figures 1 and 2, an example gas turbine engine 10 is used to propel an aircraft 12. The gas turbine engine 10 is an example type of turbomachine.

The example gas turbine engine 10 includes (in serial flow communication) a fan section 14, a low pressure compressor 18, a high pressure compressor 22, a combustor 26, a high pressure turbine 30, and a low pressure turbine 34. The gas turbine engine 10 is circumferentially disposed about an engine axis X.

During operation, air is pulled into the gas turbine engine 10 by the fan section 14. Some of the air moves through a flow path 36 to a core of the gas turbine engine 10. The air moving through the flow path 36 is pressurized by the compressors 18 and 22, mixed with fuel, and burned within the combustor 26. The turbines 30 and 34 extract energy from the hot combustion gases flowing from the combustor 26.

In a two spool design, the high pressure turbine 30 utilizes the extracted energy from the hot combustion gases to power the high pressure compressor 22 through a high speed shaft 38, and the low pressure turbine 34 utilizes the extracted energy from the hot combustion gases to power the low pressure compressor 18 and the fan section 14 through a low speed shaft 42.

The examples described in this disclosure are not limited to the two spool engine architecture described, however, and may be used in other architectures, such as single spool axial design, a three spool axial design, and still other architectures. Further, although the examples described herein are described with regard to the gas turbine engine 10, those having skill in this art and the benefit of this disclosure will understand that other examples include other types of turbomachines.

As known, the compressor sections 18 and 22 include a rotor assembly 40 having blades 44 connected to a shaft 48. Rotating the shaft 48 rotates the rotor blades. The rotor blades 44, when rotated, compress the air moving through the flow path 36.

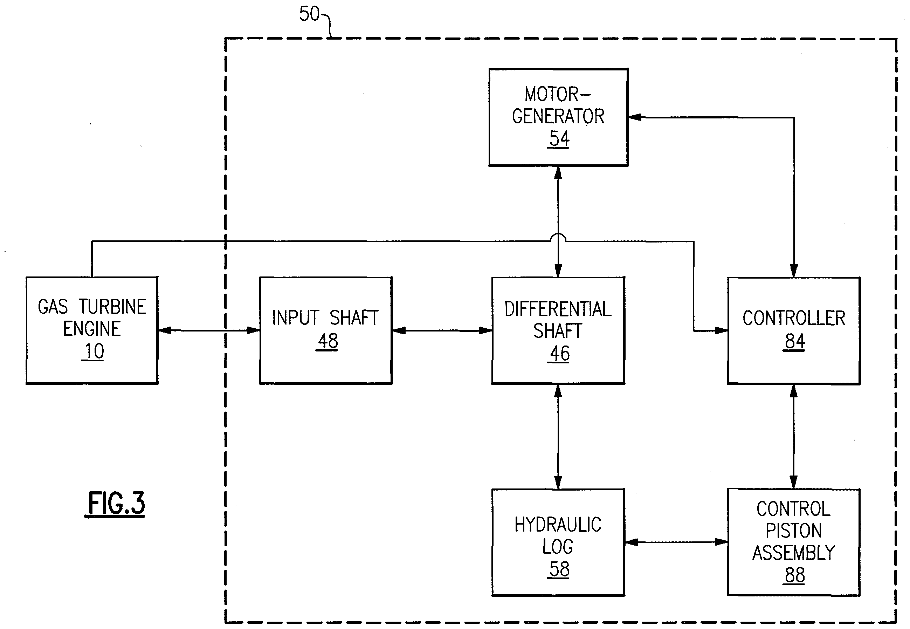

The rotor assembly 40 rotates to compress air within the compressor sections 18 and 22 during start-up of the engine 10. A motor-generator 54 continues to drive rotation of the rotor assembly 40 until the rotor assembly 40 reaches a speed capable of compressing enough air to sustain operation of the engine 10. Once the engine 10 is self-sustaining, the turbines 30 and 34 are able to suitably drive the rotor assembly 40 without requiring the rotational input from the motor-generator 54 (Figure 3). In this example, the motor-generator 54 operates as a generator after the engine 10 has reached self-sustaining speed.

Referring to Figure 3, an arrangement 50 for driving the engine 10 of Figure 1 includes the motor-generator 54, a hydraulic log 58, and a gear differential 46. The motor-generator 54 provides the rotational input to the hydraulic log 58 and differential 46 during start-up of the engine 10.

Once the engine 10 is self-sustaining, the engine 10 is configured to rotate the arrangement's input shaft 48, rather than the input shaft 48 rotating portions of the engine 10. When the engine 10 rotates the input shaft 48, the hydraulic log 58 is configured to provide a rotational input to the differential 46. The differential 46 then provides a rotational input to the motor-generator 54 so that the motor-generator 54 can operate as a generator and provide power in a known manner. The aircraft 12 utilizes power from the motor-generator 54 to operate various devices on the aircraft 12.

As can be appreciated, a relatively consistent supply of power from the motor-generator 54 is required. Variations in the rotational speed of the input shaft 48 would vary the power output from the motor-generator 54 were it not for the hydraulic log 58. The hydraulic log 58, in this example, accommodates the varying rotational speeds of the input shaft 48 and provides the motor-generator 54 with a relatively consistent rotational input such that the motor-generator 54 is able to provide a relatively consistent frequency source of power to the aircraft 12.

In one example, the hydraulic log 58 receives the rotational input from the motor-generator 54 during start-up of the engine 10. The hydraulic log 58 then provides a rotational output to the input shaft 48. The hydraulic log 58 adjusts the rotational input to a rotational output suitable for driving the engine 10. A person having skill in this art would understand a rotational output suitable for driving the input shaft 48 during start up of the engine 10.

The hydraulic log 58 accommodates variability in the rotational output provided by the motor-generator 54 during motor mode and the rotational input provided by the engine 10 during generator mode.

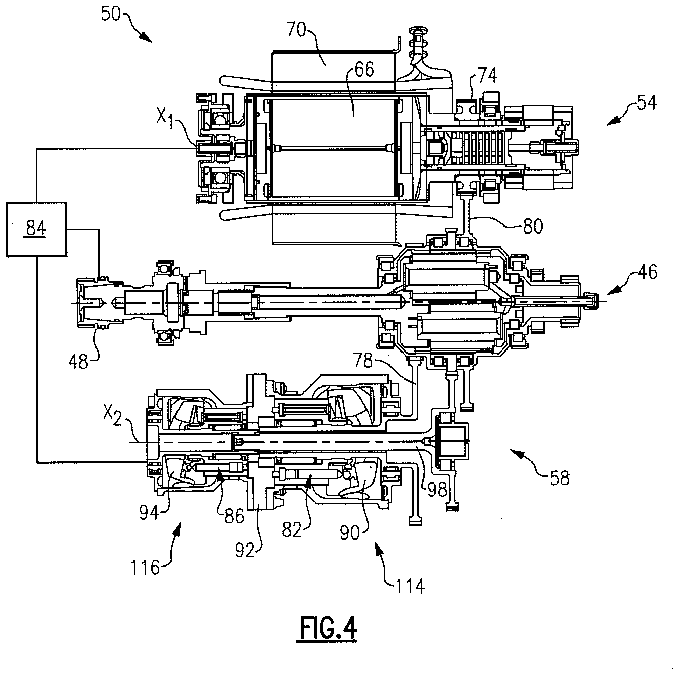

Referring now to Figure 4 with continuing reference to Figure 3, the motor-generator 54 in the example arrangement 50 includes a rotor 66 and stator 70 arranged about a motor centerline X₁. The motor-generator 54 rotates a gear 74 that is rotatably coupled to the differential 46.

The hydraulic log 58 includes a first plurality of pistons 82 and a second plurality of pistons 86. A wobbler plate 90 controls the stroke length of the first plurality of pistons 82. The wobbler plate 90 is adjusted relative to an axis X₂ of the hydraulic log 58 to change the stroke lengths of the plurality of pistons 82. A wobbler plate 94 controls the stroke lengths of the second plurality of pistons 86. The wobbler plate 94 is adjusted relative to the axis X₂ of the hydraulic log 58 to change the stroke lengths of the second plurality of pistons 86.

When the gas turbine engine 10 is driving the arrangement 50 to produce electric power in generate mode, adjusting the strokes of the first plurality of pistons 82 and the second plurality of pistons 86 adjusts the rotation of a gear 78 relative to the rotation of the hydraulic log shaft 98. The hydraulic log 58 is thus able to step up or step down rotation of gear 78 relative to the input shaft 48 speed by varying the positions of the wobbler plates 90 and 94. The gear differential 46 sums the speed of gear 78 and the speed of the input shaft 48 and produces a resultant output speed on gear 80 to drive the motor-generator 54. The relationship between the speed of gear 78, the speed of input shaft 48, and the speed of gear 80 is constant and is determined by the relative number of teeth on the gears within the differential 46. Proper control of gear 78 speed relative to the input shaft 48 speed produces a constant speed on gear 80 and on the motor-generator 54. Constant speed on the motor-generator 54 produces a constant frequency electric power output from the arrangement 50.

In this example, a controller 84 controls the positions of wobbler plates 90 and 94 via a control piston assembly 88 connected to each wobbler plate. For example, if the gear 74 is rotating too fast to supply constant frequency power from the motor-generator 54, the controller 84 initiates an adjustment to at least one of the wobbler plates 90 or 94 that causes gear 78 to slow its rotation. As can be appreciated, slowing the rotation of gear 78 slows rotation of gear 74 through the gear differential 46.

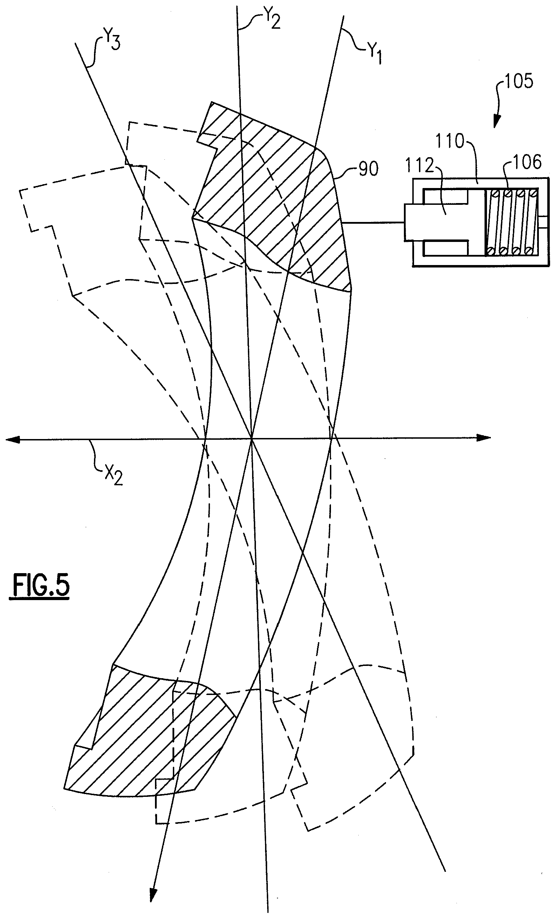

Referring now to Figures 5 with continuing reference to Figure 4, the wobbler plates 90 and 94 are connected to individual control piston assemblies 88 to enable movement over the range bounded by lines Y₁ and Y₃. The controller 84 varies the position of the wobbler plates 90 and 94 by varying the hydraulic pressure acting on the control pressure side of the piston 110. The control piston assemblies 88 include biasing forces in the form of a spring 106 and hydraulic pressure against a piston 112.

During start-up of the gas turbine engine 10, the stator 70 of the motor-generator 54 is connected to an external electric power source. The external power source causes the motor-generator 54 to act as an electric motor and accelerates the rotor 66. During acceleration of the rotor 66, the controller 84 initiates an adjustment to at least one of the wobbler plates 90 or 94 that allows the rotor 66 to accelerate while the input shaft 48 is stationary. In this mode, the hydraulic log 58 essentially free-wheels and provides minimal resistance to the motor-generator 54. This allows the rotor 66 to be accelerated with minimal drag torque and essentially declutches the rotor 66 from the input shaft 48 during initial acceleration. A person having skill in this art would understand how this would allow significant size and weight savings for both the motor-generator 54 and the external electric power source.

Once the rotor 66 is accelerated to synchronous speed, it is available to provide significant torque to the input shaft 48 to start the gas turbine engine 10. At this point, the controller 84 initiates adjustments to wobbler plate 90 to cause this half of the hydraulic log 58 to function as a hydraulic pump. Controller 84 controls wobbler plate 94 to cause this half of the hydraulic log 58 to function as a hydraulic motor in response to the working pressure generated by the plurality of pistons 82. Since the plurality of pistons 86 are stationary at the start of this sequence, working pressure rises as the plurality of pistons 82 pump oil against them.

The mechanical torque produced by the plurality of pistons 86 is transmitted via gear shaft 98 to the differential 46. The gradual addition of torque to the differential 46 causes the input shaft 48 to accelerate and gear 78 to decelerate. Acceleration of input shaft 48 causes the gas turbine engine 10 to accelerate. During acceleration, the hydraulic working pressure in hydraulic log 58 needs to be maintained to a level suitable for acceleration of the gas turbine engine 10. The torque on the input shaft 48 peaks when the portion of the hydraulic log with wobbler plate 90 reaches maximum displacement, for example. The remainder of the start cycle is then maintained at a constant power by limiting current to the motor-generator 54.

As the example gas turbine engine 10 reaches self-sustaining operation, the controller 84 initiates adjustments to wobbler plate 90 which cause that half of the hydraulic log 58 to transition to a hydraulic motor. Simultaneously, the controller 84 initiates adjustments to wobbler plate 94 which cause that half of the hydraulic log 58 to transition to a hydraulic pump. Essentially, the two halves of the hydraulic log 58 switch roles as they transition from start mode to generate mode.

Once in generate mode, wobbler plate 90 is held in a position aligned with line Y₁ by the hydraulic bias pressure within control piston assembly 88. In generate mode, controller 84 senses output frequency of the motor-generator 54 and varies the control pressure acting on the control piston assembly 88 to adjust the position of wobbler plate 94 as necessary to maintain a consistent speed of the motor-generator 54.

In one example, the controller 84 senses current to the motor-generator 54 to regulate movement of the wobbler plates 90 and 94 during the transition from start to generate mode. If the wobblers 90 and 94 are repositioned too fast, the motor-generator 54 current may undesirably climb. Further, if the wobbler plates 90 and 94 are repositioned too slow, the gas turbine engine 10 start could stall. A person skilled in this art could establish a proper relationship between the decay of current to the motor-generator 54 and the working pressure in the hydraulic log 58.

In this example, the position of the wobbler plate 90 when aligned with the line Y₂ corresponds to a motor-generator 54 acceleration mode of operation. The position of the wobbler plate 90 when aligned with line Y₁ corresponds to a normal generator mode of operation. The position of wobbler plate 90 when between line Y₂ and Y₃ corresponds to a start mode of operation during which the gas turbine engine 10 is being accelerated.

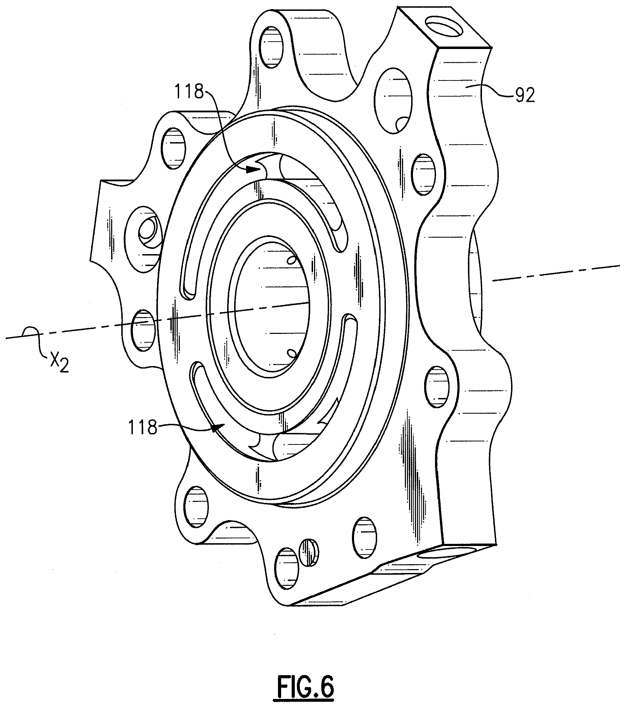

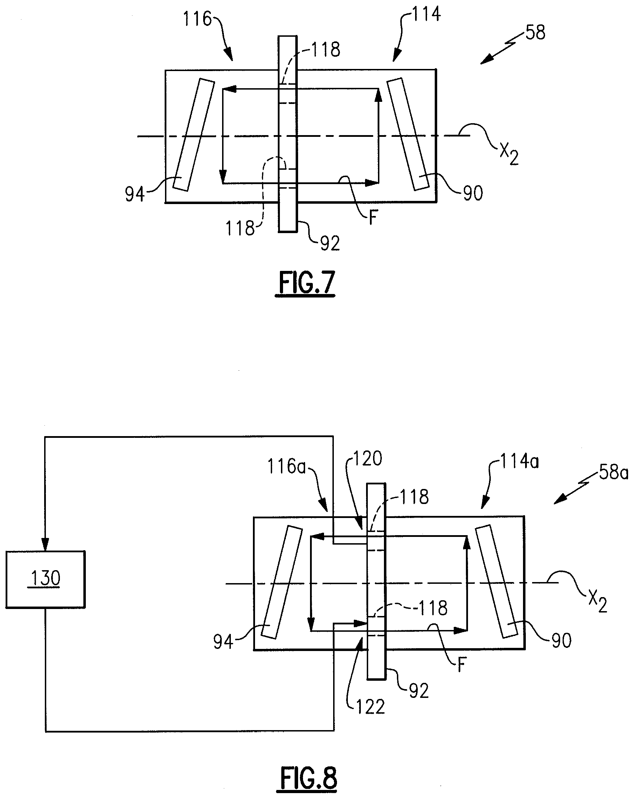

Referring to Figures 6 and 7 with continuing reference to Figures 4 and 5, a port plate 92 separates the hydraulic log 58 into a first portion 114 (or half) that includes the wobbler plate 90 and a second portion 116 (or half) that includes the wobbler plate 94.

As can be appreciated, when the wobbler plates 90 and 94 are positioned as shown in Figure 7 and the plurality of pistons 82 are rotated, the hydraulic fluid F in the area above the axis X₂ will increase in pressure and act upon the plurality of pistons 86 through the port plate 92.

Openings 118 in the port plate 92 permit flow of hydraulic fluid between the first portion 114 and the second portion 116. When the wobbler plates 90 and 94 are positioned as shown in Figures 4 and 7, the openings 118 above the axis X₂ may communicate high pressure fluid from the first portion 114 to the second portion 116, and the openings 118 below the axis X₂ communicate low pressure fluid from the second portion 116 to the first portion 114. The positioning of the wobbler plates 90 and 94 depends on whether the first portion 114 is operating as a pump or a motor, and whether the second portion 116 is operating as a pump or a motor depending on the direction of power flow and if the machine is in start or generate mode. Adjusting the positions of the wobbler plates 90 and 94 adjusts the rotational speed of the motor-generator 54 relative to the input shaft 48. Thus, both the valve 130, the wobbler plates 90 and 94, or both, may be used to adjust the speed of the motor-generator 54 relative to the input shaft 48, rather than exclusively the wobbler plates 90 and 94.

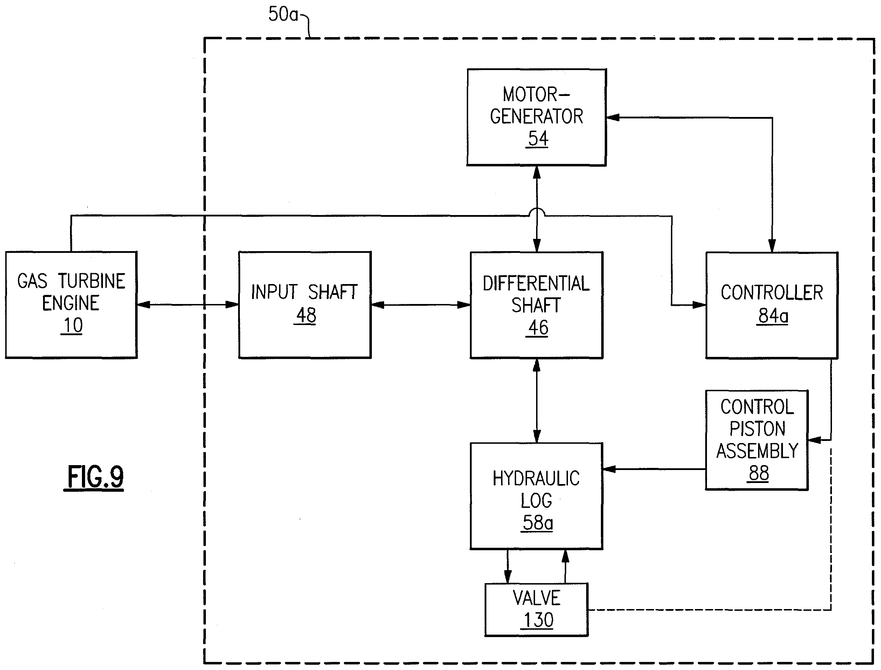

Referring now to Figures 8 and 9, in another example arrangement 58a, a controller 84a controls a valve 130 to adjust the speed of the motor-generator 54 relative to the input shaft 48. In such an example, a hydraulic log 58a generally includes a higher (working) pressure area 120 and a lower pressure area 122. These portions alternate being above or below the axis X₂ depending on whether the first portion 114 is operating as a pump or a motor, and whether the second portion 118 is operating as a pump or a motor, and if operating in start or generate mode.

The valve 130 selectively permits fluid to move from the higher pressure area 120 of the hydraulic log 58 to the lower pressure area 122. In so doing, the valve 130 regulates the working pressure and adjusts the relative differences in the rotational speed between the input shaft 48 and the motor generator 54 without requiring adjustments to either of the wobbler plates 90 or 94. The working pressure in the hydraulics of the hydraulic log 58a during start-up is a function of the torque being generated, the set displacement of the 'motoring' side (amount of stroke on variable unit during start), and the difference in actual rotational speeds of the hydraulic units from the speeds commanded by the stroke.

The valve 130 of the arrangement 58a may be used instead of, or in addition to, the control piston assembly 88.

In the arrangement 50 (Figure 3), the portion of the hydraulic log 58 functioning as a pump has a rate of change in displacement that is set by the rate which would set a constant working pressure during start-up.

As the engine 10 accelerates, the hydraulic unit driving the engine 10 speeds up causing working pressure within the hydraulic log 58 to decrease. The stroke of pistons in this portion of the hydraulic log 58 automatically advances in response to reduced bias pressure, which causes an increase in speed, torque, and working pressure until reaching a set bias level. This set bias level sets the maximum working pressure to safe limits, but also limited the amount of torque produced at certain speeds because the stroke (displacement) was limited to provide the safe working pressure limits. During the start-up, the torque generated would change as the displacements (stroke) of the hydraulic units changed, even though working pressure remained nearly constant.

In the arrangement 50a, the bias pressure on the back side of the control piston 88 may be replaced with the valve 130. Thus, there is no longer any feedback in the control piston 88 to working pressure. This characteristic allows the displacement (stroke) to be set to a maximum and held there during the start-up, and allow the valve 130 to regulate the working pressure.

As the engine 10 accelerates and the difference in flow provided by 'pumping' side of the hydraulic log 58a and the flow consumed by 'motoring' side decreases, the flow across the valve 130 drops, but constant pressure is maintained. Since the displacements of the hydraulic units are maintained at near maximum during the duration of the start-up, and pressure is maintained at maximum allowed by valve 130, the torque produced is held approximately constant at the maximum during the entire start-up.

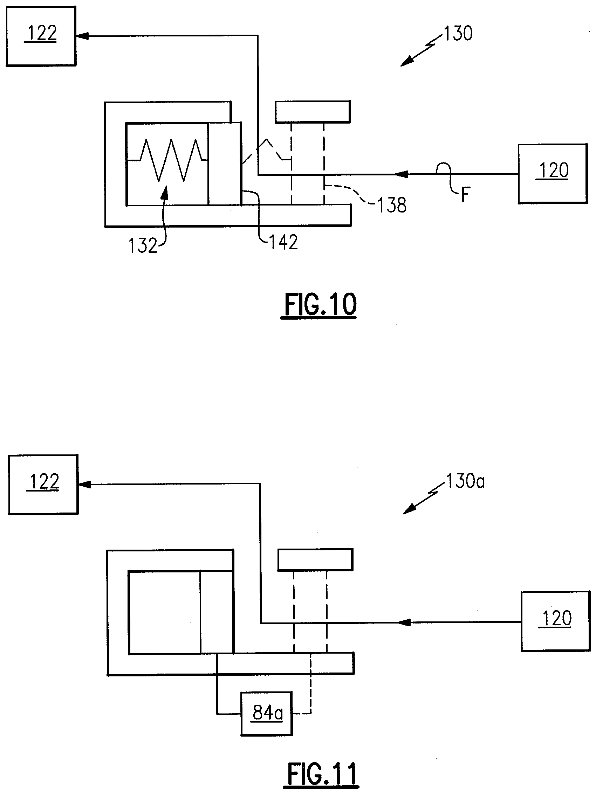

Referring to Figures 10 and 11 with continuing reference to Figures 8 and 9, in one example, the valve 130 includes a biasing member 132. The biasing member 132 is configured to bias the valve 130 toward a restrictive flow position 138. When the pressure in the working pressure area 120 of the hydraulic log 58 increases to a certain level, the pressure overcomes the biasing force exerted by the biasing member 132 and causes the valve 130 to move to a less restrictive flow position 142. The less restrictive flow position 142 permits more hydraulic fluid to move from the higher pressure area 120 of the hydraulic log 58 to the low pressure area 122 than when the valve 130 is in the more restrictive flow position 138. When the valve 130 is in the less restrictive flow position 142, hydraulic fluid continues to move from the working pressure area 120 to the lower pressure area 122 until the pressure in the working pressure area 120 drops to a point below the biasing force of the biasing member 132.

When the valve 130 is in the more restrictive position 138, hydraulic fluid still may move through the openings 118. Using the valve 130 in conjunction with the hydraulic log 58 effectively increases the area permitting flow between the various areas of the hydraulic log 58. As appreciated, pressure differentials between working pressure area 120 and the low pressure area 122 provide the relative adjustments in rotational speed and torque.

The positioning of wobbler plates 94 and 90 dictates the portion of the hydraulic log 58 that is the working pressure area 120 or the low pressure area 122. In one example, the wobbler plates 90 and 94 are alternated between a fully opened and a fully closed position depending on whether the motor generator 54 is driving the input shaft 48, or whether the input shaft 48 is driving the motor generator 54. The finer adjustments in the relative speeds and regulating working pressure are then accomplished utilizing the valve 130.

In the example of Figure 11, the valve 130a is a solenoid valve that is operatively linked to the controller 84a. The controller 84a adjusts the positioning of the solenoid valve to permit a desired amount of flow through the valve 130, thus actively controlling the working pressure and speed.

Features of the disclosed examples include using a motor-generator to start an engine and to provide electric power to the engine during different modes of operation. Another feature includes a lower weight and lower cost design when compared to other motor-generator options.

Features of the disclosed examples include a hydraulic log that gains torque between a zero speed and a peak torque point of a standard starter-drive generator (SDG). The control of the SDG is simplified relative to other designs.

Although an example embodiment has been disclosed, a worker of ordinary skill in this art would recognize that certain modifications would come within the scope of the claims. For that reason, the following claims should be studied to determine their scope and content.

## Claims

1. A hydraulic log, comprising:
a valve (130) that controls a flow of fluid within the hydraulic log (58) to provide a rotational output from the hydraulic log that is different than a rotational input to the hydraulic log, wherein the valve (130) controls flow of fluid from a higher pressure area (120) of the hydraulic log (58) to a lower pressure area (122) of the hydraulic log (58); and
a first plurality of pistons (82, 86) each having a stroke that is adjusted with a first wobbler plate (90, 94) to provide a rotational output from the hydraulic log that is different than a rotational input to the hydraulic log;
a second plurality of pistons (82, 86) wherein a stroke of the second plurality of pistons is configured to be adjusted with a second wobbler plate (90, 94) to provide a rotational output from the hydraulic log that is different than a rotational input to the hydraulic log; and
a port plate (92) which separates the hydraulic log into a first portion (114) including the first wobbler plate and a second portion (116) including the second wobbler plate, the port plate having a first opening (118) to permit flow from the first portion to the second portion and a second opening (118) to permit flow from the second portion to the first portion;
and wherein the first opening is in the higher pressure area (120) of the hydraulic log and the second opening is in the lower pressure area (122) of the hydraulic log.

2. The hydraulic log of claim 1, wherein the valve (130) comprises a biasing member (132).

3. The hydraulic log of claim 1, wherein the valve (130) comprises a solenoid.

4. The hydraulic log of any preceding claim, wherein the valve (130) is adjusted by a controller (84) to selectively control flow of fluid within the hydraulic log (54).

5. The hydraulic log of any preceding claim, wherein the hydraulic log (58) rotatably couples a turbomachine rotor (40) and a motor-generator (54).

6. The hydraulic log of any preceding claim, wherein the hydraulic log (58) is rotatably coupled to a motor-generator (54) that has a motor mode of operation and a generator mode of operation, wherein the motor-generator is configured to drive the input shaft (48) through the hydraulic log assembly when the motor-generator is in the motor mode of operation, and the input shaft is configured to drive the motor-generator through the hydraulic log when the motor-generator is in the generator mode of operation.

7. The hydraulic log of claim 6, wherein the valve (130) is configured to adjust the rotational input from the motor-generator (54) to drive the input shaft (48) when the motor-generator is in the motor mode of operation; and/or
wherein the valve (130) is configured to adjust the rotational input from the input shaft (48) to provide a rotational output that drives the motor-generator (54) when the motor-generator is in the generator mode of operation.

8. A gas turbine engine assembly, comprising:
a motor-generator (54);
a compressor rotor (40); and
the hydraulic log (58) of any of claims 1 to 4 that receives a rotational input from one of the motor-generator or the compressor rotor, and provides a rotational output to the other of the motor-generator or the compressor rotor,
wherein the valve adjusts flow between areas of the hydraulic log to selectively adjust the speed of the rotational output relative to the speed of rotational input.

9. The gas turbine engine assembly of claim 8, wherein the valve (130) selectively adjusts the speed of the rotation output relative to the rotational input independent from the first and second plurality of pistons (82, 86).

10. A method of driving components within a turbomachine, comprising:
providing a first rotational input to a hydraulic log (58) using a motor-generator (54) when the motor-generator is in a motor mode of operation; and
using a valve (130) that controls flow within a hydraulic log to adjust the first rotational input to a second rotational input that drives a compressor rotor (40);
wherein the hydraulic log (58) comprises:
a first wobbler plate (90, 94) to adjust a stroke of a first plurality of pistons (82, 86);
a second wobbler plate (90, 94) to adjust a stroke of a second plurality of pistons (82, 86); and
a port plate (92) which separates the hydraulic log into a first portion (114) including the first wobbler plate and a second portion (116) including the second wobbler plate, the port plate having a first opening (118) in a higher pressure area (120) of the hydraulic log, and a second opening (118) in a lower pressure area (122) of the hydraulic log,
the method further comprising:
moving flow through the first opening from the first portion to the second portion;
moving flow through the second opening from the second portion to the first portion; and
controlling flow of fluid from the higher pressure area (120) of the hydraulic log (58) to the lower pressure area (122) of the hydraulic log (58) using the valve.

11. The method of claim 10 further including,
providing a third rotational input to the hydraulic log (58) using the compressor rotor (40) when the motor-generator (54) is in a generator mode of operation; and
using the valve (130) that controls flow within the hydraulic log to adjust the third rotational input and to provide a fourth rotational input that drives the motor-generator;
wherein the hydraulic log comprises more than one wobbler plate (90, 94).

12. The method of claim 10 or 11, wherein the using of the valve (130) further comprises biasing the valve away from a flow permitting position to a flow restricting position via a biasing member (132).

## Patentansprüche

1. Hydraulisches Regelgetriebe, umfassend:
ein Ventil (130), das einen Fluss an Fluid innerhalb des hydraulischen Regelgetriebes (58) steuert, um einen Drehausgang von dem hydraulischen Regelgetriebe bereitzustellen, der sich von einem Dreheingang in das hydraulische Regelgetriebe unterscheidet, wobei das Ventil (130) Fluss an Fluid von einem Bereich mit höherem Druck (120) des hydraulischen Regelgetriebes (58) zu einem Bereich mit geringerem Druck (122) des hydraulischen Regelgetriebes (58) steuert; und
eine erste Vielzahl von Kolben (82, 86), die jeweils einen Takt aufweisen, der mit einer ersten Taumelplatte (90, 94) eingestellt wird, um einen Drehausgang von dem hydraulischen Regelgetriebe bereitzustellen, der sich von einem Dreheingang in das hydraulische Regelgetriebe unterscheidet;
eine zweite Vielzahl von Kolben (82, 86), wobei ein Takt der zweiten Vielzahl von Kolben konfiguriert ist, um mit einer zweiten Taumelplatte (90, 94) eingestellt zu werden, um einen Drehausgang von dem hydraulischen Regelgetriebe bereitzustellen, der sich von einem Dreheingang in das hydraulische Regelgetriebe unterscheidet; und
eine Durchlassplatte (92), die das hydraulische Regelgetriebe in einen ersten Abschnitt (114), der die erste Taumelplatte beinhaltet, und einen zweiten Abschnitt (116), der die zweite Taumelplatte beinhaltet, teilt, wobei die Durchlassplatte eine erste Öffnung (118), um Fluss von dem ersten Abschnitt zu dem zweiten Abschnitt zu ermöglichen, und eine zweite Öffnung (118), um Fluss von dem zweiten Abschnitt zu dem ersten Abschnitt zu ermöglichen, aufweist;
und wobei sich die erste Öffnung in dem Bereich mit höherem Druck (120) des hydraulischen Regelgetriebes befindet und sich die zweite Öffnung in dem Bereich mit geringerem Druck (122) des hydraulischen Regelgetriebes befindet.

2. Hydraulisches Regelgetriebe nach Anspruch 1, wobei das Ventil (130) ein Vorspannelement (132) umfasst.

3. Hydraulisches Regelgetriebe nach Anspruch 1, wobei das Ventil (130) ein Solenoid umfasst.

4. Hydraulisches Regelgetriebe nach einem vorhergehenden Anspruch, wobei das Ventil (130) durch eine Steuerung (84) eingestellt wird, um Fluss an Fluid innerhalb des hydraulischen Regelgetriebes (54) selektiv zu steuern.

5. Hydraulisches Regelgetriebe nach einem vorhergehenden Anspruch, wobei das hydraulische Regelgetriebe (58) einen Turbomaschinenrotor (40) und einen Motor-Generator (54) drehbar koppelt.

6. Hydraulisches Regelgetriebe nach einem vorhergehenden Anspruch, wobei das hydraulische Regelgetriebe (58) drehbar an einen Motor-Generator (54) gekoppelt ist, der einen Motorbetriebsmodus und einen Generatorbetriebsmodus aufweist, wobei der Motor-Generator konfiguriert ist, um die Eingangswelle (48) durch die hydraulische Regelgetriebeanordnung anzutreiben, wenn sich der Motor-Generator in dem Motorbetriebsmodus befindet und die Eingangswelle konfiguriert ist, um den Motor-Generator durch das hydraulische Regelgetriebe anzutreiben, wenn sich der Motor-Generator in dem Generatorbetriebsmodus befindet.

7. Hydraulisches Regelgetriebe nach Anspruch 6, wobei das Ventil (130) konfiguriert ist, um den Dreheingang von dem Motor-Generator (54) einzustellen, um die Eingangswelle (48) anzutreiben, wenn sich der Motor-Generator in dem Motorbetriebsmodus befindet; und/oder
wobei das Ventil (130) konfiguriert ist, um den Dreheingang von der Eingangswelle (48) einzustellen, um einen Drehausgang bereitzustellen, der den Motor-Generator (54) antreibt, wenn sich der Motor-Generator in dem Generatorbetriebsmodus befindet.

8. Gasturbinenmotoranordnung, umfassend:
einen Motor-Generator (54);
einen Verdichterrotor (40); und
das hydraulische Regelgetriebe (58) nach einem der Ansprüche 1 bis 4, das einen Dreheingang von einem von dem Motor-Generator oder dem Verdichterrotor empfängt und einen Drehausgang an den anderen von dem Motor-Generator oder dem Verdichterrotor bereitstellt,
wobei das Ventil Fluss zwischen Bereichen des hydraulischen Regelgetriebes einstellt, um die Drehzahl des Drehausgangs relativ zu der Drehzahl des Dreheingangs selektiv einzustellen.

9. Gasturbinenmotoranordnung nach Anspruch 8, wobei das Ventil (130) die Drehzahl des Drehausgangs relativ zu dem Dreheingang unabhängig von der ersten und zweiten Vielzahl von Kolben (82, 86) selektiv einstellt.

10. Verfahren zum Antreiben von Komponenten innerhalb einer Turbomaschine, umfassend:
Bereitstellen eines ersten Dreheingangs an ein hydraulisches Regelgetriebe (58) unter Verwendung eines Motor-Generators (54), wenn sich der Motor-Generator in einem Motorbetriebsmodus befindet; und
Verwenden eines Ventils (130), das Fluss innerhalb eines hydraulischen Regelgetriebes steuert, um den ersten Dreheingang in einen zweiten Dreheingang, der einen Verdichterrotor (40) antreibt, einzustellen;
wobei das hydraulische Regelgetriebe (58) Folgendes umfasst:
eine erste Taumelplatte (90, 94) zum Einstellen eines Taktes einer ersten Vielzahl von Kolben (82, 86);
eine zweite Taumelplatte (90, 94) zum Einstellen eines Taktes einer zweiten Vielzahl von Kolben (82, 86); und
eine Durchlassplatte (92), die das hydraulische Regelgetriebe in einen ersten Abschnitt (114), der die erste Taumelplatte beinhaltet, und einen zweiten Abschnitt (116), der die zweite Taumelplatte beinhaltet, teilt, wobei die Durchlassplatte eine erste Öffnung (118) in einem Bereich mit höherem Druck (120) des hydraulischen Regelgetriebes und eine zweite Öffnung (118) in einem Bereich mit geringerem Druck (122) des hydraulischen Regelgetriebes aufweist,
wobei das Verfahren ferner Folgendes umfasst:
Bewegen von Fluss durch die erste Öffnung von dem ersten Abschnitt zu dem zweiten Abschnitt;
Bewegen von Fluss durch die zweite Öffnung von dem zweiten Abschnitt zu dem ersten Abschnitt; und
Steuern von Fluss an Fluid von dem Bereich mit höherem Druck (120) des hydraulischen Regelgetriebes (58) zu dem Bereich mit geringerem Druck (122) des hydraulischen Regelgetriebes (58) unter Verwendung des Ventils.

11. Verfahren nach Anspruch 10, ferner beinhaltend:
Bereitstellen eines dritten Dreheingangs an das hydraulische Regelgetriebe (58) unter Verwendung des Verdichterrotors (40), wenn sich der Motor-Generator (54) in einem Generatorbetriebsmodus befindet; und
Verwenden des Ventils (130), das Fluss innerhalb des hydraulischen Regelgetriebes steuert, um den dritten Dreheingang zu steuern und um einen vierten Dreheingang bereitzustellen, der den Motor-Generator antreibt;
wobei das hydraulische Regelgetriebe mehr als eine Taumelplatte (90, 94) umfasst.

12. Verfahren nach Anspruch 10 oder 11, wobei das Verwenden des Ventils (130) ferner das Vorspannen des Ventils weg von einer flussermöglichenden Position zu einer flusseinschränkenden Position über ein Vorspannelement (132) umfasst.

## Revendications

1. Unité hydraulique, comprenant :
une soupape (130) qui régule un écoulement de fluide au sein de l'unité hydraulique (58) pour fournir une sortie de rotation depuis l'unité hydraulique qui est différente d'une entrée de rotation dans l'unité hydraulique, dans laquelle la soupape (130) régule un écoulement de fluide depuis une zone de pression plus élevée (120) de l'unité hydraulique (58) jusqu'à une zone de pression plus faible (122) de l'unité hydraulique (58) ; et
une première pluralité de pistons (82, 86) ayant chacun une course qui est ajustée avec une première plaque à bascule (90, 94) pour fournir une sortie de rotation depuis l'unité hydraulique qui est différente d'une entrée de rotation dans l'unité hydraulique ;
une seconde pluralité de pistons (82, 86) dans laquelle une course de la seconde pluralité de pistons est configurée pour être ajustée avec une seconde plaque à bascule (90, 94) pour fournir une sortie de rotation depuis l'unité hydraulique qui est différente d'une entrée de rotation dans l'unité hydraulique ; et
une plaque à orifices (92) qui sépare l'unité hydraulique en une première portion (114) comportant la première plaque à bascule et une seconde portion (116) comportant la seconde plaque à bascule, la plaque à orifices ayant une première ouverture (118) pour permettre un écoulement de la première portion à la seconde portion et une seconde ouverture (118) pour permettre un écoulement de la seconde portion à la première portion ;
et dans laquelle la première ouverture se trouve dans la zone de pression plus élevée (120) de l'unité hydraulique et la seconde ouverture se trouve dans la zone de pression plus faible (122) de l'unité hydraulique.

2. Unité hydraulique selon la revendication 1, dans laquelle la soupape (130) comprend un organe de sollicitation (132).

3. Unité hydraulique selon la revendication 1, dans laquelle la soupape (130) comprend un solénoïde.

4. Unité hydraulique selon une quelconque revendication précédente, dans laquelle la soupape (130) est ajustée par un dispositif de régulation (84) pour réguler de façon sélective un écoulement de fluide au sein de l'unité hydraulique (54).

5. Unité hydraulique selon une quelconque revendication précédente, dans laquelle l'unité hydraulique (58) accouple en rotation un rotor de turbomachine (40) et un moteur-générateur (54).

6. Unité hydraulique selon une quelconque revendication précédente, dans laquelle l'unité hydraulique (58) est accouplée en rotation à un moteur-générateur (54) qui a un mode de fonctionnement moteur et un mode de fonctionnement générateur, dans laquelle le moteur-générateur est configuré pour entraîner l'arbre d'entrée (48) à travers l'ensemble unité hydraulique lorsque le moteur-générateur est dans le mode de fonctionnement moteur, et l'arbre d'entrée est configuré pour entraîner le moteur-générateur à travers l'unité hydraulique lorsque le moteur-générateur est dans le mode de fonctionnement générateur.

7. Unité hydraulique selon la revendication 6, dans laquelle la soupape (130) est configurée pour ajuster l'entrée de rotation provenant du moteur-générateur (54) pour entraîner l'arbre d'entrée (48) lorsque le moteur-générateur est dans le mode de fonctionnement moteur ; et/ou
dans laquelle la soupape (130) est configurée pour ajuster l'entrée de rotation provenant de l'arbre d'entrée (48) pour fournir une sortie de rotation qui entraîne le moteur-générateur (54) lorsque le moteur-générateur est dans le mode de fonctionnement générateur.

8. Ensemble moteur à turbine à gaz, comprenant :
un moteur-générateur (54) ;
un rotor de compresseur (40) ; et
l'unité hydraulique (58) de l'une quelconque des revendications 1 à 4 qui reçoit une entrée de rotation depuis l'un du moteur-générateur ou du rotor de compresseur, et fournit une sortie de rotation à l'autre du moteur-générateur ou du rotor de compresseur ;
dans lequel la soupape ajuste un écoulement entre des zones de l'unité hydraulique pour ajuster sélectivement la vitesse de la sortie de rotation par rapport à la vitesse d'entrée de rotation.

9. Ensemble moteur à turbine à gaz selon la revendication 8, dans lequel la soupape (130) ajuste sélectivement la vitesse de la sortie de rotation par rapport à l'entrée de rotation indépendamment des première et seconde pluralités de pistons (82, 86).

10. Procédé d'entraînement de composants au sein d'une turbomachine, comprenant :
la fourniture d'une première entrée de rotation à une unité hydraulique (58) à l'aide d'un moteur-générateur (54) lorsque le moteur-générateur est dans un mode de fonctionnement moteur ; et
l'utilisation d'une soupape (130) qui régule un écoulement au sein d'une unité hydraulique pour ajuster la première entrée de rotation à une deuxième entrée de rotation qui entraîne un rotor de compresseur (40) ;
dans lequel l'unité hydraulique (58) comprend :
une première plaque à bascule (90, 94) pour ajuster une course d'une première pluralité de pistons (82, 86) ;
une seconde plaque à bascule (90, 94) pour ajuster une course d'une seconde pluralité de pistons (82, 86) ; et
une plaque à orifices (92) qui sépare l'unité hydraulique en une première portion (114) comportant la première plaque à bascule et une seconde portion (116) comportant la seconde plaque à bascule, la plaque à orifices ayant une première ouverture (118) dans une zone de pression plus élevée (120) de l'unité hydraulique, et une seconde ouverture (118) dans une zone de pression plus faible (122) de l'unité hydraulique,
le procédé comprenant en outre :
le déplacement d'un écoulement à travers la première ouverture de la première portion à la seconde portion ;
le déplacement d'un écoulement à travers la seconde ouverture de la seconde portion à la première portion ; et
la régulation d'un écoulement de fluide de la zone de pression plus élevée (120) de l'unité hydraulique (58) à la zone de pression plus faible (122) de l'unité hydraulique (58) à l'aide de la soupape.

11. Procédé selon la revendication 10, comportant en outre,
la fourniture d'une troisième entrée de rotation dans l'unité hydraulique (58) à l'aide du rotor de compresseur (40) lorsque le moteur-générateur (54) est dans un mode de fonctionnement générateur ; et
l'utilisation de la soupape (130) qui régule un écoulement au sein de l'unité hydraulique pour ajuster la troisième entrée de rotation et pour fournir une quatrième entrée de rotation qui entraîne le moteur-générateur ;
dans lequel l'unité hydraulique comprend plus d'une plaque à bascule (90, 94).

12. Procédé selon la revendication 10 ou 11, dans lequel l'utilisation de la soupape (130) comprend en outre la sollicitation de la soupape en éloignement d'une position d'autorisation d'écoulement vers une position de limitation d'écoulement via un organe de sollicitation (132).
